# EUROPEAN PATENT SPECIFICATION

(11) **EP 1 833 110 B1**
(45) Date of publication and mention of the grant of the patent: **12.05.2010**
(21) Application number: 07103754.3
(22) Date of filing: 08.03.2007
(51) Int. Cl.: H01M 4/88, H01M 4/92, H01M 8/10

(54) **Cathode catalyst for membrane-electrode assembly and fuel cell system**
Kathodenkatalysator für Membranelektrodenanordnung und Brennstoffzellensystem
Catalyseur à cathode pour assemblage membrane-électrode et système de pile à combustible

(30) Priority: 08.03.2006 KR 20060021744
(43) Date of publication of application: 12.09.2007
(73) Proprietor: Samsung SDI Co., Ltd., Gyeonggi-do (KR)
(72) Inventor: Alexandrovichserov, Alexey, Gyeonggi-do (KR); Kwak, Chan, Kyunggi-do (KR)
(74) Representative: Killin, Stephen James

(56) References cited:
- WO-A-2004/023581
- WO-A-2004/106591
- WO-A-2005/023416
- REEVE R W: "Methanol tolerant oxygen reduction catalysts based on transition metal sulfides" JOURNAL OF THE ELECTROCHEMICAL SOCIETY, ELECTROCHEMICAL SOCIETY. MANCHESTER, NEW HAMPSHIRE, US, vol. 145, no. 10, 1998, pages 3463-3471, XP002150152 ISSN: 0013-4651
- CAMACHO-BRAGADO G A ET AL: "Structure and catalytic properties of nanostructured molybdenum sulfides" JOURNAL OF CATALYSIS, ACADEMIC PRESS, DULUTH, MN, US, vol. 234, no. 1, 15 August 2005 (2005-08-15), pages 182-190, XP004997354 ISSN: 0021-9517

## Description

The present invention relates to a cathode catalyst for a fuel cell, to a membrane-electrode assembly for a fuel cell, and to a fuel cell system comprising the same. More particularly, the present invention relates to a cathode catalyst having high activity for reduction of an oxidant and being capable of improving performance of a membrane-electrode assembly for a fuel cell, to a membrane-electrode assembly and to a fuel cell system comprising the same.

A fuel cell is a power generation system for producing electrical energy through an electrochemical redox reaction of an oxidant and hydrogen in fuel such as a hydrocarbon-based material such as methanol, ethanol, or natural gas.

Representative exemplary fuel cells include a polymer electrolyte membrane fuel cell (PEMFC) and a direct oxidation fuel cell (DOFC). The direct oxidation fuel cell includes a direct methanol fuel cell, which uses methanol as a fuel.

The polymer electrolyte membrane fuel cell has an advantage of a high energy density, but it also has problems in the need to carefully handle hydrogen gas and the requirement of additional devices such as a fuel reforming processor for reforming methane or methanol, natural gas, and the like in order to produce hydrogen as the fuel gas.

On the contrary, a direct oxidation fuel cell has a lower energy density than that of the polymer electrolyte membrane fuel cell, but it has the advantages of easy handling of a fuel, being capable of operating at room temperature due to its low operation temperature, and no need for additional fuel reforming processors.

In the above fuel cell, the stack that generates electricity substantially includes several to scores of unit cells stacked in multi-layers, and each unit cell is formed of a membrane-electrode assembly (MEA) and a separator (also referred to as a bipolar plate). The membrane-electrode assembly has an anode (also referred to as a fuel electrode or an oxidation electrode) and a cathode (also referred to as an air electrode or a reduction electrode) attached to each other with an electrolyte membrane between them.

A fuel is supplied to an anode and absorbed in a catalyst thereof, and the fuel is oxidized to produce protons and electrons. The electrons are transferred into a cathode via an external-circuit, and the protons are transferred into the cathode through a polymer electrolyte membrane. An oxidant is supplied to the cathode, and the oxidant, protons, and electrons are reacted on a catalyst at the cathode to produce electricity along with water.

It is therefore, an object of the present invention to provide an improved cathode catalyst and an improved fuel cell.

It is another object to provide a cathode catalyst exhibiting superior activity and selectivity for reduction of an oxidant.

The present invention provides a cathode catalyst for a fuel cell having excellent activity and selectivity for reduction of an oxidant. The present invention also provides a membrane-electrode assembly for a fuel cell including the cathode catalyst. The present invention further provides a fuel cell system including the membrane-electrode assembly for a fuel cell.

According to an aspect of the present invention, a cathode catalyst for a fuel cell includes A-B-S, where A is selected from the group consisting of Ru, Rh, and combinations thereof, B is selected from the group consisting of W, Mo, and combinations thereof, and the A-B-S has a nanowire shape.

According to another aspect of the present invention, a membrane-electrode assembly for a fuel cell including an anode and a cathode facing each other and a polymer electrolyte membrane interposed therebetween is provided. The anode and cathode include a conductive electrode substrate and a catalyst layer formed thereon. The catalyst layer includes the above cathode catalyst.

According to yet another aspect of the present invention, a fuel cell system including an electricity generating element, which includes a membrane-electrode assembly and a separator positioned at each side of the membrane-electrode assembly, a fuel supplier that supplies the electricity generating element with a fuel, and an oxidant supplier that supplies the electricity generating element with an oxidant, is provided.

According to still another aspect of the present invention, a method of preparing a cathode catalyst for a fuel cell, includes: preparing a first emulsion by mixing A starting material, B starting material and S starting material with a surfactant, where the A starting material is a water-soluble salt including an element selected from the group consisting of Rh, Ru, and combinations thereof, the B starting material is a water-soluble salt including an element selected from the group consisting of Mo, W, and combinations thereof, and the S starting material includes sulfur; mixing and heating the first emulsion and the second emulsion; cooling the heated mixture of the first emulsion and the second emulsion; filtering the mixture to obtain sediment; and drying the sediment to obtain a nanowire-shaped A-B-S.

According to yet another aspect of the invention, there is provided the use of a cathode catalyst comprising nanowire shaped A-B-S for a fuel cell, where A is selected from the group consisting of Ru, Rh, and combinations thereof, and B is selected from the group consisting of W, Mo, and combinations thereof.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a schematic cross-sectional view showing a membrane-electrode assembly according to an embodiment of the present invention; and
FIG. 2 is a schematic diagram showing the structure of a fuel cell system according to another embodiment of the present invention.

A fuel cell is a power generation system for generating electrical energy through oxidation of a fuel and reduction of an oxidant. The oxidation of a fuel occurs at an anode, while the reduction of an oxidant occurs at a cathode.

Both of the anode and the cathode each include a catalyst layer which includes a catalyst to catalyze the oxidation of a fuel and the reduction of an oxidant. An example of the catalyst for the anode catalyst layer (also referred to as "anode catalyst") includes platinum-ruthenium, while an example of the catalyst for the cathode catalyst layer (also referred to as "cathode catalyst") may include platinum.

However, the platinum as a cathode catalyst has a problem of low reduction of an oxidant. It can also be depolarized by a fuel that crosses over toward a cathode through an electrolyte membrane, thereby becoming non-activated in a direct oxidation fuel cell. Therefore, more attention has been paid to another catalyst that can be substituted for the platinum.

According to an embodiment of the present invention, a cathode catalyst for a fuel cell includes A-B-S (herein, A is selected from the group consisting of Ru, Rh, and combinations thereof, B is selected from the group consisting of W, Mo, and combinations thereof, and S is sulfur). The A-B-S has a nanowire shape.

The A of the catalyst includes Ru or Rh, which has high catalyst activity for reduction of an oxidant. However, oxygen in the air is easily adsorbed to Ru or Rh and can thereby block the active center of Ru or Rh, resulting in deterioration of reduction of an oxidant.

Accordingly, the S plays a role of promoting oxidation of a fuel and suppressing reduction of an oxidant by preventing oxygen in the air from being bound with Ru or Rh.

The B includes W or Mo, which is an element having various oxidation numbers. The W or Mo plays a role of increasing catalyst activity and selectivity for reduction of an oxidant when forming a catalyst with A and S.

Therefore, a cathode catalyst of an embodiment of the present invention has high activity and excellent selectivity for reduction of an oxidant, and can thereby maintain performance of a cathode even when a fuel crosses over toward the cathode.

The cathode catalyst may include 50 to 70 atom% of A, 20 to 25 atom% of B, and 5 to 30 atom% of S, and more preferably, 55 to 65 atom% of A, 22 to 24 atom% of B, and 10 to 25 atom% of S, relative to the total number of atoms of all elements within A-B-S.

When A is included in an amount of more than 70 atom% in forming the A-B-S catalyst, it may decrease selectivity, while when in an amount of less than 50 atom%, it may deteriorate activity. In addition, when the amount of B is more than 25 atom%, it may lead catalyst particles to have a large size, while when less than 20 atom%, it may deteriorate activity of a catalyst.

Likewise, when the amount of S is more than 30 atom%, it may deteriorate activity of a catalyst, while when less than 5 atom%, a catalyst may be changed to be nonselective.

The A-B-S has a nanowire shape. Since the nanowire has high surface energy, the A-B-S can have high activity. In addition, since the nanowire has a high specific surface area, the A-B-S can make reduction of an oxidant easier and be used in a black state, which is not supported on a carrier. Therefore, a cathode catalyst of an embodiment of the present invention may have preferably a specific surface area preferably ranging from 20 to 150 m²/g, and more preferably from 100 to 150 m²/g. The larger the specific surface area the cathode catalyst has, the more activity it has. When the cathode catalyst has a specific surface area of less than 20 m²/g, it has little influence in increasing activity of the catalyst.

Hereinafter, a method of preparing the cathode catalyst of an embodiment of the present invention is described.

First, starting materials, which may be A, B, and S, are mixed with a surfactant to prepare a first emulsion.

The surfactant, which is added for preparing the first emulsion, can include C₃₃H₆₀O_{10.5} (brand name: Triton X-100) and the like. The amount of the surfactant has no particular limit, but is preferably in a range of 30% to 70% of the total volume of the starting materials.

The starting materials are appropriately mixed in the aforementioned composition ratio of A-B-S. The A starting material may include a water-soluble salt including an element selected from the group consisting of Rh, Ru, and combinations thereof. For example, when Ru is selected, Ru(CH₃COO)₃ may be used as a starting material, while when Rh is selected, H₂RhCl₄ may be used as a starting material. Next, the B starting material may include a water-soluble salt including an element selected from the group consisting of Mo, W, and combinations thereof. For example, when Mo is selected, Mo(CO)₆ may be used as a starting material, while when W is selected, W(CH₃COO)₃ may be used as a starting material. The S starting material may representatively include CH₃CSNH₂.

Then, a second emulsion is separately prepared by mixing a surfactant and an emulsifier.

The surfactant is added for preparing the emulsion as previously explained, and may include C₃₃H₆₀O_{10.5} (product name: Triton X-100) or the like. The amount of the surfactant is not particularly limited, but it is preferably added in a range of 30% to 70% out of a total volume of the starting materials.

The emulsifier may include C₆H₁₂ (cyclohexane) and so on, but is not limited thereto.

The reason for separately preparing the first and second emulsions is to control the length and thickness of a nanowire of the catalyst.

The prepared first and second emulsions are mixed, heated to 50 to 80 °C, and then maintained for 4 to 8 hours at that temperature range. The mixture slowly turns gray during the process. When the color change has stopped, the heating is stopped and the mixture cooled to room temperature.

Subsequently, a nanowire-shaped A-B-S can be prepared by filtering the mixture to obtain sediment and washing and drying the filtered sediment.

The present invention also provides a membrane-electrode assembly for a fuel cell including a cathode catalyst for a fuel cell.

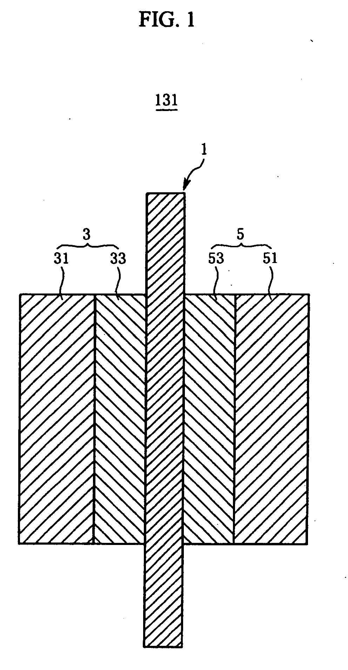

FIG. 1 is a schematic cross-sectional view of a membrane-electrode assembly 131 according to an embodiment of the present invention. Hereinafter, a membrane-electrode assembly 131 of an embodiment of the present invention is described in more detail referring to the drawing.

The membrane-electrode assembly of an embodiment of the present invention includes an anode 3 and a cathode 5 facing each other and a polymer electrolyte membrane 1 interposed therebetween. The anode 3 and cathode 5 each include an electrode substrate formed of a conductive substrate 31, 51 and a catalyst layer 33, 55 formed on the electrode substrate.

The membrane-electrode assembly 131 generates electrical energy through oxidation of a fuel and reduction of an oxidant. One or several membrane-electrode assemblies are attached in a stack.

An oxidant is reduced at a catalyst layer 53 of the cathode, which includes a cathode catalyst of an embodiment of the present invention. The cathode catalyst has excellent selectivity as well as excellent activity for reduction of an oxidant, and can thereby improve performance of a cathode 5 and a membrane-electrode assembly 131 including the same.

A fuel is oxidized at a catalyst layer 33 of the anode 3, which includes a catalyst that is capable of catalyzing the oxidation of a fuel. The catalyst may be platinum-based as is commonly used in the conventional art. The platinum-based catalyst includes platinum, ruthenium, osmium, a platinum-ruthenium alloy, a platinum-osmium alloy, a platinum-palladium alloy, a platinum-M alloy, or combinations thereof, where M is transition elements selected from the group consisting of Ga, Ti, V, Cr, Mn, Fe, Co, Ni, Cu, Zn, Sn, Mo, W, Rh, Ru, and combinations thereof. Representative examples of the anode catalysts include at least one selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof.

Such a metal catalyst may be used in a form of a metal itself (black catalyst) or can be used while being supported on a carrier. The carrier may include carbon such as acetylene black, denka black, activated carbon, ketjen black, or graphite, or an inorganic particulate such as alumina, silica, zirconia, or titania. The carbon is generally used in the art.

The catalyst layer may further include a binder resin to improve its adherence and proton transference.

The binder resin may be proton conductive polymer resin having a cation exchange group selected from the group consisting of a sulfonic acid group, a carboxylic acid group, a phosphoric acid group, a phosphonic acid group, and derivatives thereof, at its side chain. Non-limiting examples of the binder resin include at least one proton conductive polymer selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, and polyphenylquinoxaline-based polymers. In a preferred embodiment, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), or poly (2,5-benzimidazole).

The binder resin may be used singularly or as a mixture. Optionally, the binder resin may be used along with a non-conductive polymer to improve adherence between a polymer electrolyte membrane and the catalyst layer. The use amount of the binder resin may be adjusted to its usage purpose.

Non-limiting examples of the non-conductive polymer include polytetrafluoroethylene (PTFE), tetrafluoroethylene-hexafluoropropylene copolymers (FEP), tetrafluoroethylene-perfluoro alkyl vinylether copolymers (PFA), ethylene/tetrafluoroethylene (ETFE)), ethylenechlorotrifluoro-ethylene copolymers (ECTFE), polyvinylidene fluoride, polyvinylidene fluoride-hexafluoropropylene copolymers (PVdF-HFP), dodecyl benzene sulfonic acid, sorbitol, and combinations thereof.

The electrode substrate supports the electrode, and provides a path for transferring fuel and an oxidant to the catalyst. In one embodiment, the electrode substrate is formed from a material such as carbon paper, carbon cloth, or carbon felt, or a metal cloth that includes a metal film formed on a surface of porous cloth film or a cloth composed of polymer fibers. The electrode substrate is not limited thereto.

The electrode substrate may include water-repellent fluoro-based resins to prevent deterioration of diffusion efficiency due to the water generated during operation of a fuel cell. The fluoro-based resin may include polyvinylidene fluoride, polytetrafluoroethylene, fluorinated ethylene propylene, polychloro trifluoroethylene, or fluoroethylene polymers, but is not limited thereto.

A microporous layer (MPL) can be added between the aforementioned electrode substrate and catalyst layer to increase reactant diffusion effects. The microporous layer generally includes conductive powders with a certain particle diameter. The conductive material may include, but is not limited to, carbon powder, carbon black, acetylene black, activated carbon, carbon fiber, fullerene, nano-carbon, or combinations thereof. The nano-carbon may include a material such as carbon nanotubes, carbon nanofiber, carbon nanowire, carbon nanohorns, carbon nanorings, or combinations thereof.

The microporous layer is formed by coating a composition comprising a conductive powder, a binder resin, and a solvent on the conductive substrate. The binder resin may include, but is not limited to, polytetrafluoro ethylene, polyvinylidene fluoride, polyvinyl alcohol, cellulose acetate, polyhexafluoro propylene, polyperfluoroalkylvinyl ether, polyperfluoro sulfonylfluoride alkoxy vinyl ether, and copolymers thereof. The solvent may include, but is not limited to, an alcohol such as ethanol, isopropylalcohol, n-propylalcohol, butanol, and so on, water, dimethyl acetamide, dimethyl sulfoxide, or N-methylpyrrolidone. The coating method may include, but is not limited to, screen printing, spray coating, doctor blade methods, gravure coating, dip coating, silk screening, painting, and so on, depending on the viscosity of the composition.

The polymer electrolyte membrane 1 plays a role of exchanging ions by transferring the protons produced from an anode catalyst 33 to a cathode catalyst 53.

The proton conductive polymer for the polymer electrolyte membrane of an embodiment of the present invention may be any polymer resin having a cation exchange group selected from the group consisting of a sulfonic acid group, a carboxylic acid group, a phosphoric acid group, a phosphonic acid group, and derivatives thereof, at its side chain.

Non-limiting examples of the polymer resin include at least one proton conductive polymers selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, and polyphenylquinoxaline-based polymers. In a preferred embodiment, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), or poly (2,5-benzimidazole).

The H can be replaced with Na, K, Li, Cs, or tetrabutylammonium in a proton conductive group of the proton conductive polymer. When the H is replaced with Na in an ion exchange group at the terminal end of the proton conductive group, NaOH is used. When the H is replaced with tetrabutylammonium, tetrabutylammonium hydroxide is used. K, Li, or Cs can also be replaced by using appropriate compounds. A method of replacing H is known in this related art, and therefore is not described in detail.

According to an embodiment of the present invention, a fuel cell system including the above membrane-electrode assembly is provided.

A fuel cell system of an embodiment of the present invention includes at least one of electricity generating element, a fuel supplier, and an oxidant supplier.

The electricity generating element includes a membrane-electrode assembly that includes a polymer electrolyte membrane, a cathode and an anode positioned at both sides of the polymer electrolyte membrane, and separators positioned at both sides of the membrane-electrode assembly. It generates electricity through oxidation of fuel and reduction of an oxidant.

The fuel supplier plays a role of supplying the electricity generating element with a fuel including hydrogen, and the oxidant supplier plays a role of supplying the electricity generating element with an oxidant. The oxidant includes oxygen or air.

The fuel includes liquid or gaseous hydrogen, or a hydrocarbon-based fuel such as methanol, ethanol, propanol, butanol, or natural gas.

The fuel cell system may be applied to a polymer electrolyte membrane fuel cell (PEMFC), a direct oxidation fuel cell (DOFC), or a mixed reactant fuel cell.

The mixed reactant fuel cell includes an anode catalyst in an anode catalyst layer, which selectively acts only for oxidation of a fuel, and a cathode catalyst in a cathode catalyst layer, which selectively acts only for reduction of an oxidant. Therefore, even if the fuel and oxidant mixture is injected into the anode and cathode catalyst layers, only oxidation of the fuel occurs at the anode catalyst layer, and only reduction of the oxidant occurs at a cathode catalyst layer. Therefore, since the mixed reactant fuel cell does not need a separator that is necessary for a general fuel cell, the mixed reactant fuel cell can have advantages of decreasing manufacturing cost and down-sizing a battery.

According to the embodiment of the present invention, since a cathode catalyst has excellent selectivity for reduction of oxygen, it can be more effectively used for a direct oxidation fuel cell having a cross-over problem of fuel and most effectively for a direct methanol fuel cell (DMFC).

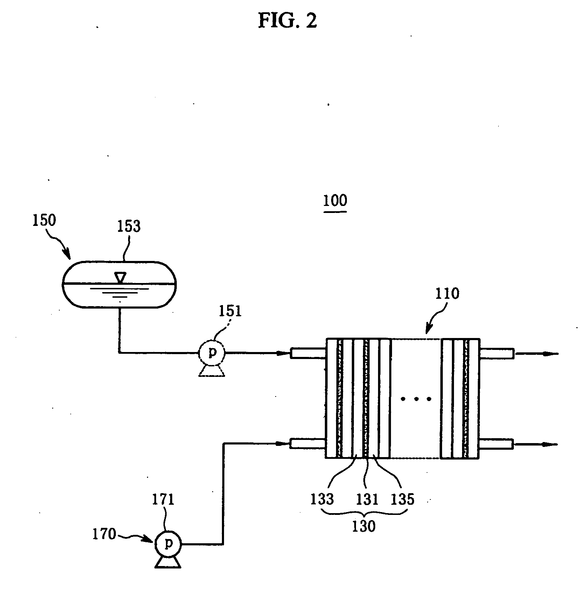

FIG. 2 shows a schematic structure of a fuel cell system 100 that will be described in detail with reference to this accompanying drawing, as follows. FIG. 2 illustrates a fuel cell system 100 wherein a fuel and an oxidant are provided to the electricity generating element 130 through pumps 151 and 171, but the present invention is not limited to such structures. The fuel cell system of an embodiment of the present invention alternately includes a structure wherein a fuel and an oxidant are provided in a diffusion manner.

A fuel cell system 100 includes a stack 110 composed of at least one electricity generating element 130 that generates electrical energy through an electrochemical reaction of a fuel and an oxidant, a fuel supplier 150 for supplying a fuel to the electricity generating element 130, and an oxidant supplier 170 for supplying oxidant to the electricity generating element 130.

In addition, the fuel supplier 150 is equipped with a tank 153 that stores fuel, and a pump 151 that is connected therewith. The fuel pump 151 supplies fuel stored in the tank 153 with a predetermined pumping power.

The oxidant supplier 170, which supplies the electricity generating element 130 of the stack 110 with an oxidant, is equipped with at least one pump 171 for supplying an oxidant with a predetermined pumping power.

The electricity generating element 130 includes a membrane-electrode assembly 131 that oxidizes hydrogen or a fuel and reduces an oxidant, and separators 133 and 135 that are respectively positioned at opposite sides of the membrane-electrode assembly and supply hydrogen or a fuel, and an oxidant, respectively. At least one electricity generating element 130 constitutes a stack 110.

The following examples illustrate embodiments of the present invention in more detail. However, it is understood that the present invention is not limited by these examples.

### Example 1

A first emulsion was prepared by mixing 1g of Ru(CH₃COO)₃, 0.5g of W(CH₃COO)₃, 15g of CH₃CSNH₂, and 12ml of Triton X-100 in a flask, and stirring with a magnetic bar for 15 minutes.

A second emulsion was prepared by mixing 16g of C₆H₁₂ (cyclohexane) and 8ml of Triton X-100 in a flask and stirring with a magnetic bar for 15 minutes.

The prepared first and second emulsions were added to a flask and mixed by spinning a magnetic bar therein for 15 minutes. Then, the flask with the first and second emulsion mixture was heated to 60 °C, maintained at 60 °C for 8 hours, and then cooled to room temperature. Next, the mixture in the flask was filtered to gain sediment. The sediment was washed with distilled water and ethanol 3 times and dried at 60 °C for 4 hours to obtain a nanowire-shaped Ru-W-S. The Ru-W-S included 54 atom% of Ru, 24 atom% of W, and 22 atom% of S, and had a specific surface area of 100 m²/g.

A working electrode was prepared by loading the catalysts according to Example 1 on glassy carbon to be 3.78 X 10⁻³ mg, while a platinum mesh was employed as a counter electrode.

### Example 2

A first emulsion was prepared by mixing 1.6g of H₂RhCl₄, 0.9g of Mo(CO)₆, 15g of CH₃CSNH₂, and 12ml of Triton X-100 in a flask, and stirring with a magnetic bar for 15 minutes.

A second emulsion was prepared by mixing 16g of C₆H₁₂ (cyclohexane) and 8ml of Triton X-100 in a flask and stirring with a magnetic bar for 15 minutes.

The prepared first and second emulsions were added to a flask and mixed by spinning a magnetic bar therein for 15 minutes. Then, the flask with the first and second emulsion mixture was heated to 60 °C, maintained at 60 °C for 8 hours, and then cooled to room temperature. Next, the mixture in the flask was filtered to obtain sediment. The sediment was washed with distilled water and ethanol 3 times and dried at 60 °C for 4 hours to obtain a nanowire-shaped Rh-Mo-S. The Rh-Mo-S included 67 atom% of Rh, 23 atom% of Mo, and 10 atom% of S with a specific surface area of 110m²/g.

A working electrode was prepared by loading the catalysts according to Example 2 on glassy carbon to be 3.78 X 10⁻³ mg, while a platinum mesh was employed as a counter electrode.

### Comparative Example 1

Ru-W-S supported in carbon was prepared by mixing 0.7g of Ru(CH₃COO)₃, 0.4g of W(CH₃COO)₃, 1g of a sulfur powder, and 1.2g of ketjen black with 15ml of a solvent and heating them at 60 °C for 4 hours. The Ru-W-S supported in carbon included 57 atom% of Ru, 22 atom% of W, and 21 atom% of S. The Ru-W-S had no nanowire shape and had a specific surface area of 15m²/g.

A working electrode was prepared by loading the catalysts according to Comparative Example 1 on glassy carbon to be 3.78 X 10⁻³ mg, while a platinum mesh was employed as a counter electrode.

An oxygen-saturated sulfuric acid solution was prepared by bubbling oxygen gas for 2 hours in a sulfuric acid solution of a 0.5M concentration. Then, the prepared electrodes were placed into the oxygen-saturated sulfuric acid solution to measure current density while changing voltage. The results are provided in the following Table 1.

**Table 1**

| | Current density (mA/cm2 (0.7 V)) |
|---|---|
| Examples 1 and 2 | 1.25 |
| Comparative Example 1 | 0.71 |

Referring to the results, the electrode including the nanowire-shaped Ru-W-S catalyst according to Examples 1 and 2 had higher current density than that including the Ru-W-S/C catalyst according to Comparative Example 1.

Accordingly, the catalyst of Examples 1 and 2 proved to have much improved activity compared to that of Comparative Example 1.

Since a cathode catalyst for a fuel cell of an embodiment of the present invention has excellent activity and selectivity for reduction of an oxidant, it can improve performance of a membrane-electrode assembly for a fuel cell and a fuel cell system including the same.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A cathode catalyst for a fuel cell, comprising:
nanowire shaped A-B-S, where A is selected from the group consisting of Ru, Rh,
and combinations thereof, and B is selected from the group consisting of W, Mo,
and combinations thereof and wherein the catalyst comprises 50 to 70 atom% of A, 20 to 25 atom% of B, and 5 to 30 atom% of S.

2. The cathode catalyst of claim 1, wherein the catalyst comprises 55 to 65 atom% of A, 22 to 24 atom% of B, and 10 to 25 atom% of S.

3. The cathode catalyst of claims 1 or 2, wherein the catalyst has a specific surface area of 20 to 150 m²/g.

4. The cathode catalyst of claim 3, wherein the catalyst has a specific surface area of 100 to 150 m²/g.

5. A membrane-electrode assembly for a fuel cell, comprising:
an anode comprising:
a first conductive electrode substrate, and
an anode catalyst layer disposed on the first electrode substrate;
a cathode facing the anode, the cathode comprising:
a second conductive electrode substrate, and
a cathode catalyst layer disposed on the second electrode substrate, the cathode catalyst layer comprising the cathode catalyst according to one of claims 1 to 4; and
a polymer electrolyte membrane interposed between the anode and the cathode.

6. The membrane-electrode assembly of claim 5, wherein the polymer electrolyte membrane comprises a polymer resin having a cation exchange group selected from the group consisting of a sulfonic acid group, a carboxylic acid group, a phosphoric acid group, a phosphonic acid group, and derivatives thereof at its side chain.

7. The membrane-electrode assembly of claims 5 or 6, wherein the polymer resin is selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, polyphenylquinoxaline-based polymers, and combinations thereof.

8. The membrane-electrode assembly of claims 5, 6 or 7, wherein the polymer resin is selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), poly (2,5-benzimidazole), and combinations thereof.

9. The membrane-electrode assembly of any of claims 5, 6, 7 or 8, wherein the anode catalyst layer includes platinum, ruthenium, osmium, a platinum-ruthenium alloy, a platinum-osmium alloy, a platinum-palladium alloy, a platinum-M alloy where M is a transition element selected from the group consisting of Ga, Ti, V, Cr, Mn, Fe, Co, Ni, Cu, Zn, Sn, Mo, W, Rh, Ru, and combinations thereof, and combinations thereof.

10. A fuel cell system comprising:
an electricity generating element, comprising:
a membrane-electrode assembly comprising:
an anode comprising:
a first conductive electrode substrate, and
an anode catalyst layer disposed on the first electrode substrate;
a cathode facing the anode, the cathode comprising:
a second conductive electrode substrate, and
a cathode catalyst layer disposed on the second electrode substrate, the cathode catalyst layer comprising the cathode catalyst layer comprising the cathode catalyst according to one of claims 1 to 4; and
a polymer electrolyte membrane interposed between the anode and the cathode; and
a separator positioned at each side of the membrane-electrode assembly;
a fuel supplier for supplying the electricity generating element with a fuel; and an oxidant supplier for supplying the electricity generating element with an oxidant.

11. The fuel cell system of claim 10, wherein the fuel cell system is selected from the group consisting of a polymer electrolyte membrane fuel cell, a direct oxidation fuel cell, and a mixed reactant fuel cell.

12. The fuel cell system of claims 10 or 11, wherein the fuel cell system is a direct oxidation fuel cell.

13. A method of preparing a cathode catalyst for a fuel cell, comprising:
preparing a first emulsion by mixing A starting material, B starting material and S starting material with a surfactant, where the A starting material is a water-soluble salt including an element selected from the group consisting of Rh, Ru, and
combinations thereof, the B starting material is a water-soluble salt including an element selected from the group consisting of Mo, W, and combinations thereof, and the S starting material includes sulfur;
preparing a second emulsion by mixing a surfactant and an emulsifier;
mixing and heating the first emulsion and the second emulsion;
cooling the heated mixture of the first emulsion and the second emulsion;
filtering the mixture to obtain sediment; and
drying the sediment to obtain a nanowire-shaped A-B-S where A is selected from the group consisting of Ru, Rh, and combinations thereof, and B is selected from the group consisting of W, Mo, and combinations thereof and wherein the catalyst comprises 50 to 70 atom% of A, 20 to 25 atom% of B, and 5 to 30 atom% of S.

14. The method of claim 13, wherein the cathode catalyst has a specific surface area of 20 to 150m²/g.

15. The method of claims 13 or 14, wherein the heating is performed at 50 to 80 °C until the color change of the mixture is stopped.

16. The method of claims 13, 14 or 15, wherein the A starting material is selected from the group consisting of Ru(CH₃COO)₃ and H₂RhCl₄, the B starting material is selected from the group consisting of Mo(CO)₆ and W(CH₃COO)₃, and the S starting material is CH₃CSNH₂.

17. A cathode catalyst obtainable by the method of any one of claims 13 to 16.

18. Use of a cathode catalyst comprising nanowire shaped A-B-S for a fuel cell, where A is selected from the group consisting of Ru, Rh, and combinations thereof, and B is selected from the group consisting of W, Mo, and combinations thereof and wherein the catalyst comprises 50 to 70 atom% of A, 20 to 25 atom% of B, and 5 to 30 atom% of S.

## Patentansprüche

1. Ein Kathodenkatalysator für eine Brennstoffzelle, umfassend:
nanodrahtförmiges A-B-S, wobei A aus der aus Ru, Rh und Kombinationen derselben bestehenden Gruppe ausgewählt ist und B aus der aus W, Mo und Kombinationen derselben bestehenden Gruppe ausgewählt ist und wobei der Katalysator 50 bis 70 Atomprozent A, 20 bis 25 Atomprozent B und 5 bis 30 Atomprozent S umfasst.

2. Der Kathodenkatalysator nach Anspruch 1, wobei der Katalysator 55 bis 65 Atomprozent A, 22 bis 24 Atomprozent B und 10 bis 25 Atomprozent S umfasst.

3. Der Kathodenkatalysator nach den Ansprüchen 1 oder 2, wobei der Katalysator eine spezifische Oberfläche von 20 bis 150 m²/g aufweist.

4. Der Kathodenkatalysator nach Anspruch 3, wobei der Katalysator eine spezifische Oberfläche von 100 bis 150 m²/g aufweist.

5. Eine Membran-Elektroden-Anordnung für eine Brennstoffzelle, umfassend:
eine Anode, umfassend:
ein erstes leitendes Elektrodensubstrat und
eine auf dem ersten Elektrodensubstrat angeordnete Anodenkatalysatorschicht; eine der Anode zugewandten Kathode, wobei die Kathode Folgendes umfasst:
ein zweites leitendes Elektrodensubstrat und
eine auf dem zweiten Elektrodensubstrat angeordnete Kathodenkatalysatorschicht, wobei die Kathodenkatalysatorschicht den Kathodenkatalysator gemäß einem der Ansprüche 1 bis 4 umfasst; und
eine zwischen der Anode und der Kathode eingefügte Polymerelektrolytmembran.

6. Die Membran-Elektroden-Anordnung nach Anspruch 5, wobei die Polymerelektrolytmembran ein Polymerharz mit einer aus der aus einer Sulfonsäuregruppe, einer Carbonsäuregruppe, einer Phosphorsäuregruppe, einer Phosphonsäuregruppe und Derivaten derselben bestehenden Gruppe ausgewählten Kationenaustauschgruppe an seiner Seitenkette umfasst.

7. Die Membran-Elektroden-Anordnung nach den Ansprüchen 5 oder 6, wobei das Polymerharz aus der aus Polymeren auf Fluorbasis, Polymeren auf Benzimidazolbasis, Polymeren auf Polyimidbasis, Polymeren auf Polyetherimidbasis, Polymeren auf Polyphenylensulfidbasis, Polymeren auf Polysulfonbasis, Polymeren auf Polyethersulfonbasis, Polymeren auf Polyetherketonbasis, Polymeren auf Polyetheretherketonbasis, Polymeren auf Polyphenylchinoxalinbasis und Kombinationen derselben bestehenden Gruppe ausgewählt ist.

8. Die Membran-Elektroden-Anordnung nach den Ansprüchen 5, 6 oder 7, wobei das Polymerharz aus der aus Poly(perfluorsulfonsäure), Poly(perfluorcarbonsäure), einem Copolymer von Tetrafluorethylen und Fluorvinylether mit einer Sulfonsäuregruppe, entfluoriertem Polyetherketonsulfid, Arylketon, Poly(2,2'-(m-phenylen)-5,5'-benzimidazol), Poly(2,5-benzimidazol) und Kombinationen derselben bestehenden Gruppe ausgewählt ist.

9. Die Membran-Elektroden-Anordnung nach irgendeinem der Ansprüche 5, 6, 7 oder 8, wobei die Anodenkatalysatorschicht Platin, Ruthenium, Osmium, eine Platin-Ruthenium-Legierung, eine Platin-Osmium-Legierung, eine Platin-Palladium-Legierung, eine Platin-M-Legierung, wobei M ein aus der aus Ga, Ti, V, Cr, Mn, Fe, Co, Ni, Cu, Zn, Sn, Mo, W, Rh, Ru und Kombinationen derselben bestehenden Gruppe ausgewähltes Übergangsmetall ist, und Kombinationen derselben enthält.

10. Ein Brennstoffzellensystem, umfassend:
ein Elektrizität generierendes Element, umfassend:
eine Membran-Elektroden-Anordnung, umfassend:
eine Anode, umfassend:
ein erstes leitendes Elektrodensubstrat und
eine auf dem ersten Elektrodensubstrat angeordnete Anodenkatalysatorschicht; eine der Anode zugewandte Kathode, wobei die Kathode Folgendes umfasst:
ein zweites leitendes Elektrodensubstrat und
eine auf dem zweiten Elektrodensubstrat angeordnete Kathodenkatalysatorschicht, wobei die Kathodenkatalysatorschicht die den Kathodenkatalysator nach einem der Ansprüche 1 bis 4 umfassende Kathodenkatalysatorschicht umfasst; und eine zwischen der Anode und der Kathode eingefügte Polymerelektrolytmembran; und
einen an jeder Seite der Membran-Elektroden-Anordnung angeordneten Separator;
eine Brennstoffquelle zum Versorgen des Elektrizität generierenden Elements mit einem Brennstoff; und
eine Oxidationsmittelquelle zum Versorgen des Elektrizität generierenden Elements mit einem Oxidationsmittel.

11. Das Brennstoffzellensystem nach Anspruch 10, wobei das Brennstoffzellensystem aus der aus einer Polymerelektrolytmembran-Brennstoffzelle, einer Direktoxidationsbrennstoffzelle und einer Brennstoffzelle mit gemischten Reaktanten bestehenden Gruppe ausgewählt ist.

12. Das Brennstoffzellensystem nach den Ansprüchen 10 oder 11, wobei das Brennstoffzellensystem eine Direktoxidationsbrennstoffzelle ist.

13. Ein Verfahren zur Herstellung eines Kathodenkatalysators für eine Brennstoffzelle, umfassend:
Präparieren einer ersten Emulsion durch Mischen von A-Ausgangsmaterial, B-Ausgangsmaterial und S-Ausgangsmaterial mit einem Netzmittel, wobei das A-Ausgangsmaterial ein wasserlösliches Salz ist, das ein aus der aus Rh, Ru und Kombinationen derselben bestehenden Gruppe ausgewähltes Element enthält, das B-Ausgangsmaterial ein wasserlösliches Salz ist, das ein aus der aus Mo, W und Kombinationen derselben bestehenden Gruppe ausgewähltes Element enthält, und das S-Ausgangsmaterial Schwefel enthält;
Präparieren einer zweiten Emulsion durch Mischen eines Netzmittels und eines Emulgators; Mischen und Erhitzen der ersten Emulsion und der zweiten Emulsion;
Kühlen der erhitzten Mischung der ersten Emulsion und der zweiten Emulsion;
Filtern der Mischung zur Gewinnung von Sediment; und
Trocknen des Sediments zur Gewinnung eines nanodrahtförmigen A-B-S, wobei A aus der aus Ru, Rh und Kombinationen derselben bestehenden Gruppe ausgewählt ist und B aus der aus W, Mo und Kombinationen derselben bestehenden Gruppe ausgewählt ist und wobei der Katalysator 50 bis 70 Atomprozent A, 20 bis 25 Atomprozent B und 5 bis 30 Atomprozent S umfasst.

14. Das Verfahren nach Anspruch 13, wobei der Kathodenkatalysator eine spezifische Oberfläche von 20 bis 150m²/g aufweist.

15. Das Verfahren nach den Ansprüchen 13 oder 14, wobei das Erhitzen bei 50 bis 80 °C durchgeführt wird, bis die Farbveränderung der Mischung beendet ist.

16. Das Verfahren nach den Ansprüchen 13, 14 oder 15, wobei das A-Ausgangsmaterial aus der aus Ru(CH₃COO)₃ und H₂RhCl₄ bestehenden Gruppe ausgewählt ist, das B-Ausgangsmaterial aus der aus Mo(CO)₆ und W(CH₃COO)₃ bestehenden Gruppe ausgewählt ist und das S-Ausgangsmaterial CH₃CSNH₂ ist.

17. Ein durch das Verfahren nach irgendeinem der Ansprüche 13 bis 16 gewinnbarer Kathodenkatalysator.

18. Verwendung eines nanodrahtförmiges A-B-S umfassenden Kathodenkatalysators für eine Brennstoffzelle, wobei A aus der aus Ru, Rh und Kombinationen derselben bestehenden Gruppe ausgewählt ist und B aus der aus W, Mo und Kombinationen derselben bestehenden Gruppe ausgewählt ist und wobei der Katalysator 50 bis 70 Atomprozent A, 20 bis 25 Atomprozent B und 5 bis 30 Atomprozent S umfasst.

## Revendications

1. Catalyseur cathodique pour une pile à combustible, comprenant:
A-B-S sous forme de nanofil, où A est sélectionné du groupe constitué de Ru, Rh, et leurs combinaisons, et B est sélectionné du groupe constitué de W, Mo, et leurs combinaisons et dans lequel le catalyseur comprend 50 à 70 % atomique de A, 20 à 25 % atomique de B, et 5 à 30 % atomique de S.

2. Catalyseur cathodique de la revendication 1, dans lequel le catalyseur comprend 55 à 65 % atomique de A, 22 à 24 % atomique de B, et 10 à 25 % atomique de S.

3. Catalyseur cathodique des revendications 1 ou 2, dans lequel le catalyseur a une surface spécifique de 20 à 150 m²/g.

4. Catalyseur cathodique de la revendication 3, dans lequel le catalyseur a une surface spécifique de 100 à 150 m²/g.

5. Ensemble membrane-électrodes pour une pile à combustible, comprenant :
une anode comprenant :
un premier substrat d'électrode conductrice, et
une couche de catalyseur anodique disposée sur le premier substrat d'électrode ;
une cathode en vis-à-vis de l'anode, la cathode comprenant :
un deuxième substrat d'électrode conductrice, et
une couche de catalyseur cathodique disposée sur le deuxième substrat d'électrode,
la couche de catalyseur cathodique comprenant le catalyseur cathodique selon l'une des revendications 1 à 4 ; et
une membrane électrolyte polymère interposée entre l'anode et la cathode.

6. Ensemble membrane-électrodes de la revendication 5, dans lequel la membrane électrolyte polymère comprend une résine polymère ayant un groupe échangeur de cations sélectionné du groupe constitué d'un groupe d'acide sulfonique, un groupe d'acide carboxylique, un groupe d'acide phosphorique, un groupe d'acide phosphonique, et leurs dérivés, au niveau de sa chaîne latérale.

7. Ensemble membrane-électrodes des revendications 5 ou 6, dans lequel la résine polymère est sélectionnée du groupe constitué de polymères fluorés, polymères à base de benzimidazole, polymères à base de polyimide, polymères à base de polyéthérimide, polymères à base de polysulfure de phénylène, polymères à base de polysulfone, polymères à base de polyéther sulfone, polymères à base de polyéthercétone, polymères à base de polyétheréthercétone, polymères à base de polyphénylquinoxaline, et leurs combinaisons.

8. Ensemble membrane-électrodes des revendications 5, 6 ou 7, dans lequel la résine polymère est sélectionnée du groupe constitué d'acide poly(perfluorosulfonique), acide poly(perfluorocarboxylique), un copolymère de tétrafluorotéhylène et éther fluorovinylique ayant un groupe d'acide sulfonique, sulfure de polyéthercétone défluoré, aryle cétone, poly(2,2'-(m-phénylène)-5,5'-bibenzimidazole), poly(2,5-benzimidazole), et leurs combinaisons.

9. Ensemble membrane-électrodes de l'une quelconque des revendications 5, 6, 7 ou 8, dans lequel la couche de catalyseur anodique comporte du platine, ruthénium, osmium, un alliage de platine-ruthénium, un alliage de platine-osmium, un alliage de platine-palladium, un alliage de platine-M où M est un élément de transition sélectionné du groupe constitué de Ga, Ti, V, Cr, Mn, Fe, Co, Ni, Cu, Zn, Sn, Mo, W, Rh, Ru et leurs combinaisons, et leurs combinaisons.

10. Système de pile à combustible comprenant :
un élément générant de l'électricité, comprenant :
un ensemble membrane-électrodes comprenant :
une anode comprenant :
un premier substrat d'électrode conductrice, et
une couche de catalyseur anodique disposé sur le premier substrat d'électrode ;
une cathode en vis-à-vis de l'anode, la cathode comprenant :
un deuxième substrat d'électrode conductrice, et
une couche de catalyseur cathodique disposée sur le deuxième substrat d'électrode, la couche de catalyseur cathodique comprenant la couche de catalyseur cathodique comprenant le catalyseur cathodique selon l'une des revendications 1 à 4 ; et
une membrane électrolyte polymère interposée entre l'anode et la cathode ; et
un séparateur positionné de part et d'autre de l'ensemble membrane-électrodes ;
un dispositif d'alimentation en combustible destiné à procurer un combustible à l'élément générant de l'électricité ; et
un dispositif d'alimentation en comburant destiné à procurer un comburant à l'élément générant de l'électricité.

11. Système de pile à combustible de la revendication 10, dans lequel le système de pile à combustible est sélectionné du groupe constitué d'une pile à combustible à membrane électrolyte polymère, d'une pile à combustible à oxydation directe, et d'une pile à combustible à réactifs mélangés.

12. Système de pile à combustible des revendications 10 ou 11, dans lequel le système de pile à combustible est une pile à combustible à oxydation directe.

13. Procédé d'élaboration d'un catalyseur cathodique pour une pile à combustible, comprenant le fait de :
préparer une première émulsion en mélangeant une matière première A, une matière première B et une matière première S avec un agent de surface, où la matière première A est un sel soluble dans l'eau comportant un élément sélectionné du groupe constitué de Rh, Ru, et leurs combinaisons, la matière première B est un sel soluble dans l'eau comportant un élément sélectionné du groupe constitué de Mo, W et leurs combinaisons, et la matière première S comporte du soufre ;
préparer une deuxième émulsion en mélangeant un agent de surface et un émulsifiant ;
mélanger et chauffer la première émulsion et la deuxième émulsion ;
refroidir le mélange chauffé de la première émulsion et la deuxième émulsion ;
filtrer le mélange afin d'obtenir un dépôt ; et
sécher le dépôt afin d'obtenir un A-B-S en forme de nanofil où A est sélectionné du groupe constitué de Ru, Rh, et leurs combinaisons, et B est sélectionné du groupe constitué de W, Mo, et leurs combinaisons et dans lequel le catalyseur comprend 50 à 70 % atomique de A, 20 à 25 % atomique de B, et 5 à 30 % atomique de S.

14. Procédé de la revendication 13, dans lequel le catalyseur cathodique a une surface spécifique de 20 à 150 m²/g.

15. Procédé des revendications 13 ou 14, dans lequel le chauffage est mis en oeuvre à 50 jusqu'à 80°C jusqu'à ce que le changement de couleur du mélange prenne fin.

16. Procédé des revendications 13, 14 ou 15, dans lequel la matière première A est sélectionnée du groupe constitué de Ru(CH₃COO)₃ et H₂RhCl₄, la matière première B est sélectionnée du groupe constitué de Mo(CO)₆ et W(CH₃COO)₃ et la matière première S est du CH₃CSNH₂.

17. Catalyseur cathodique que l'on peut obtenir par le procédé de l'une quelconque des revendications 13 à 16.

18. Utilisation d'un catalyseur cathodique comprenant du A-B-S en forme de nanofil pour une pile à combustible, où A est sélectionné du groupe constitué de Ru, Rh, et leurs combinaisons, et B est sélectionné du groupe constitué de W, Mo, et leurs combinaisons et dans lequel le catalyseur comprend 50 à 70 % atomique de A, 20 à 25 % atomique de B, et 5 à 30 % atomique de S.
